# EUROPEAN PATENT APPLICATION

(11) **EP 2 879 052 A1**
(43) Date of publication of application: **03.06.2015**
(21) Application number: 14795933.2
(22) Date of filing: 10.02.2014
(51) Int. Cl.: G06F 9/445

(54) **METHOD FOR RELEASING LARGE LINUX SOFTWARE PACKAGE**

(30) Priority: 18.09.2013 CN 201304307349
(71) Applicant: G-Cloud Technology Ltd, SongShan Lake Technology Industrial Zone DongGuan Guangdong 523808 (CN)
(72) Inventor: WEI, Linlin, DongGuan, Guangdong 523808 (CN); MO, Zhanpeng, DongGuan, Guangdong 523808 (CN); YANG, Song, DongGuan, Guangdong 523808 (CN); JI, Tongkai, DongGuan, Guangdong 523808 (CN)
(74) Representative: Hocking, Adrian Niall
(86) International application number: PCT/CN2014/071918
(87) International publication number: WO 2015/039413

(57) **Abstract**

A method for distributing large-sized Linux software packages, in a field of a Linux software distribution, includes steps of: installing a Linux minimal system; obtaining a log file of the installation, and setting a cache of a local download rpm; building an environment for creating iso, and creating a working directory; testing an environment dependency of a developed software and packaging into rpm packages, copying the downloaded rpm packages within the cache into the working directory, and registering; installing tools of createrepo and mkisofs for generating a disc; editing a kickstart file, ks.cfg; generating and modifying a comps.xml to designating the rpm packages and dependencies thereof which are required within a software archive of the system; generating an iso file of gcloud, and verifying with MD5 value. The method is applicable to a large-sized software package distribution by overcoming version verification and vulnerability to network.

## Description

### Field of Invention

The present invention relates to a distribution of Linux software, and more particularly to a method for distributing large-sized Linux software packages.

### Description of Related Arts

The large-sized Linux software is characterized in the long installation time and the multiple software dependencies. The conventional distribution of the large-sized Linux software is carried by the rpm (Red Hat Package Manager) and deb (Debian) software packages along with the profiles illustrating the installation of the dependency software, the post-installation verification method, etc.

However, the conventional distribution method of the above large-sized Linux software has following disadvantages.

Firstly, it consumes much work in order to become native to different Linux versions. When the large-sized Linux is developed based on a certain version, the Linux kernel and system software on which the large-sized Linux depends may be merely native to the certain version; it may require a search for the substitute version before being native to other Linux versions, as well as tests about compatibility and stability on the substitute version.

Secondly, the conventional distribution method usually excludes any direct download of the dependency packages. The users usually have to download the corresponding software from the Linux package source with yum (Yellow dog Updater, Modified) or apt (Advanced Packaging Tools) through the illustration of the document. On one hand, the conventional distribution method depends on the network to download; the software can not be installed without the connection to the Internet or Intranet to create the local source. On the other hand, the yum and the apt only download the latest version of the dependency software as a default, and herein the downloaded dependency may be insufficient for the large-sized Linux software.

Thirdly, the software distributed in form of the rpm or deb software packages involves no data integrity checking mechanism, and thus during the distribution, the software package is exposed to potential tampering which threats the data security.

In order to improve the deployment efficiency of the software, to expedite the deployment and enhance the software stability during deploying, a disc image system for pre-customizing a software package distribution is needed to accomplish a stable and quick installation manner by installing the disc.

### Summary of the Present Invention

An object of the present invention is to provide a method for distributing large-sized Linux software packages, which solves version verifications of a great number of rpm packages, and downloads of the rpm packages and related package dependencies without network, so as to securely and stably deploy software development; and which also reduces instability caused by data loss or an installation of incompatible rpm package.

Accordingly, in order to accomplish the above objectives, the present invention provides a method for distributing large-sized Linux software packages, comprising steps of:
(1) providing an original version of a Linux installation disc for a Linux large-sized software development environment, and installing a Linux minimal system on a server;
(2) after the minimal system is installed, obtaining a log file of the installation, wherein the log file comprises a list of packages which the system has installed;
(3) setting a rpm or deb tool in the system to save a cache of downloaded software;
(4) building an environment for creating an ISO, creating a working directory, and copying files of the original disc, except the packages, into the working directory;
(5) installing a dependency environment of the Linux large-sized software in the system; installing packages of the Linux large-sized software in order to verify whether the dependency environment is correct or not, until the Linux large-sized software begins to run properly;
(6) copying a cache of a dependency software under a system software cache directory onto the working directory;
(7) installing createrepo and mkisofs tools which are required by generating of a new disc;
(8) compiling a ks.cfg file, and causing the iso system to guide an automatic installation via the ks.cfg;
(9) re-generating an xml profile, namely a comps.xml file, of the packages under the working directory, and re-editing the comps.xml file according to needs;
(10) generating the iso image file; and
(11) generating a message-digest algorithm 5 (MD5) checkcode.

The minimal system refers to kernel packages and the packages on which the large-sized Linux software depend contained in the Linux installation disc; excluding installations of other application software and desktop system, etc.

The log file, after installation, is a /root/install.log file. The install.log file which contain the packages which the minimal system installed, then obtains a list of the installed packages by commanding:
awk '/Installing/{print $2}' install.log |sed 's/^[0-9]*://g' >/root/packages.list
   then imports the list into a local file, and finally transfers the installed rpm packages into the working directory according to the list.

The step of "setting the rpm tool in the system to save the cache of the downloaded software" is preferably to open the option of saving cache in a /etc/yum.conf configuration file of the Linux system, and then caching the downloaded rpm packages in a directory of /var/cache/yum/x86_64/6/.

The step of "re-generating the comps.xml profile" is to synchronize all files of the disc into the working directory, then to generate a corresponding comps.xml in a /repodata/ directory under the working directory, wherein the comps.xml is generated by commanding: createrepo -g repodata/*-comps.xml /data/OS/ -- --simple-md-filenames; and then to customize dependencies between components of the comps.xml and the rpm packages based on the command.

The said packages on which a running of the installed software depends and archive files related to the dependencies relates to the rpm packages and the dependencies thereof required by a running of the developed software after being compiled. The rpm packages are related packages within yum install of the minimal system, required by the running of the software. A list of related dependencies is recorded, and the dependencies relationships are added into the comps.xml file; and the corresponding rpm in the directory of /var/cache/yum/x86_64/6/ is copied under /packages/ of the working directory; and, names of the correspondent rpm are added into a list file of TRANS.TBL under /packages/.

By pre-customizing the disc image system of the software package distribution and installing the disc to accomplish the stable and quick installation, the present invention improves an efficiency of software deployment, expedites the deployment and enhances a stability of the software during deploying. In the meantime, the present invention reduces time spent on creating required software or reduces the required related dependency archive files on the software-running environment.

### Brief Description of the Drawings

The present invention will become apparent from the accompanying drawings.

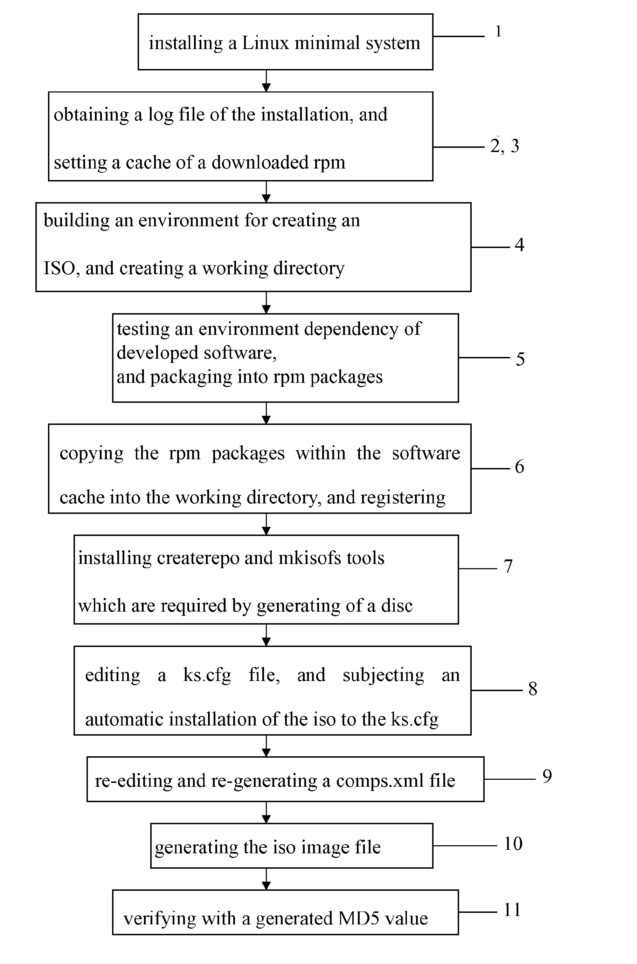

The Figure is a flow chart of a method for distributing large-sized Linux software packages according to a preferred embodiment of the present invention.

### Detailed Description of the Preferred Embodiment

Referring to the Figure, according to a preferred embodiment of the present invention, a method for distributing large-sized Linux software packages comprises steps of:
Firstly, creating a working directory for creating a system:
   (1) mkdir -p /mnt/cdrom
   (2) mkdir -p /data/OS
   (3) mount /dev/cdrom /mnt/cdrom
   (4) sync -a --exclude=Packages /mnt/cdrom /data/OS
   (5) mkdir /data/OS/Packages;
Secondly, copying rpm condensed by an edited scripts into a correspondent directory, the edited scripts being as follows:
   #!/bin/bash
      DEBUG=0
      CentOS_DVD=/mnt/cdrom
      ALL_RPMS_DIR=/mnt/cdrom/Packages #source disc RPM package
      storage directory
      KOS_RPMS_DIR=/data/OS/Packages #condensed RPM
      package storage directory
      packages_list=/root/packages.list #list of reduced RPM
      packages number_of_packages='cat $packages_list | wc -1' # obtain package
      number
      i=1
      while [$i -le $number_of_packages] ; do
      line='head -n $i $packages_list | tail -n -1'
      name='echo $line | awk ' {print $1}''
      version='echo $line | awk'{print $3}' | cut-f2 -d :' if [$DEBUG -eq "1"] ; then
      echo $i: $line
      echo $name
      echo $version
      fi
      if [$DEBUG -eq "1"] ; then
      ls $ALL_RPMS_DIR/$name-$version*
      if[$? -ne 0] ; then
      echo "cp $ALL_RPMS_DIR/$name-$version* "
      fi
      else
      echo "cp $ALL_RPMS_DIR/$name-$version* $KOS_RPMS_DIR/"
      cp $ALL_RPMS_DIR/$name-$version* $KOS_RPMS_DIR/ #copying required package
      # in case the copy failed
      if[$? -ne 0] ; then
      echo "cp $ALL_RPMS_DIR/$name-$version* "
      cp $ALL_RPMS_DIR/$name* $KOS_RPMS_DIR/
      fi
      fi
      i='expr $i + 1'
      done;
Thirdly, installing required practical tools:
   yum -y install createrepo mkisofs;
Fourthly, generating a comps.xml file:
   cd /data/OS
      createrepo -g repodata/*-comps.xml /data/OS/ -- --simple-md-filenames;
Fifthly, adding and reducing related dependencies according to the comps.xml file, and creating the related dependencies of gcloud;
Sixthly, compiling a ks.cfg file whose content is:
   cp /root/anaconda-ks.cfg /data/OS/isolinux/ks.cfg
   Vi /data/OS/isolinux/ks.cfg
   firewall --disabled
   install
   cdrom
   rootpw --iscrypted $1$2nKbKr9J$sjwbbe62.txKtSLTKRyp1/
   auth --useshadow --passalgo=sha512
   text
   keyboard us
   lang en_US
   selinux --disabled
   skipx
   logging --level=info
   reboot --eject
   timezone Asia/Shanghai
   bootloader --location=mbr
   zerombr
   clearpart --all --initlabel
   part /boot --fstype="ext4" --size=256
   part swap --fstype="swap" --size=16000
   part / --fstype="ext4" --size=20000
   %post
   /etc/init.d/gtunneld start
   /etc/init.d/iptables stop
   chkconfig iptables off
   chkconfig cgconfig on
   chkconfig gtunneld on
   mkdir /instances
   mkdir /sharefiles
   ulimit -c unlimited
   echo "/usr/local/lib">>/etc/ld.so.conf
   echo "ldconfig /usr/local/lib">>/etc/rc.local
   echo "GcloudOS Linux release 6.1 (Based on CentOS 6.4)" > /etc/centos-release
   sed -i 's/CentOS release 6.4 (Final)/GcloudOS Linux release 6.1 (Based on CentOS 6.4)/g' /etc/issue
   sed -i 's/CentOS release 6.4 (Final)/GcloudOS Linux release 6.1 (Based on CentOS 6.4)/g' /etc/issue.net
   sed -i's/localhost.localdomain/GcloudOS/g' /etc/sysconfig/network
   sed -i's/CentOS/GcloudOS/g' /etc/rc.d/rc.sysinit
   sed -i 's/rhgb/ /g' /boot/grub/grub.conf
   sed -i "s/enforcing/disabled/g" /etc/selinux/config
   sed -i "/unix_sock_group/ s/#unix_sock_group/unix_sock_group/g" /etc/libvirt/libvirtd.conf
   sed -i "/unix_sock_group/ s/libvirt/root/g" /etc/libvirt/libvirtd.conf
   sed -i "/unix_sock_rw_perms/ s/#unix_sock_rw_perms/unix_sock_rw_perms/g" /etc/libvirt/libvirtd.conf
   sed -i "/unix_sock_ro_perms/ s/#unix_sock_ro_perms/unix_sock_ro_perms/g" /etc/libvirt/libvirtd.conf
   sed -i "/unix_sock_rw_perms/ s/0770/0777/g" /etc/libvirt/libvirtd.conf
   sed -i "/security_driver/ s/#security_driver/security_driver/g" /etc/libvirt/qemu.conf
   sed -i "/security_driver/ s#selinux#none#g" /etc/libvirt/qemu.conf
   sed -i "/#user/ s/#user/user/g" /etc/libvirt/qemu.conf
   sed -i "/#group/ s/#group/user/g" /etc/libvirt/qemu.conf /etc/init.d/libvirtd restart
   %end
   %packages
   @base;
Seventhly, configuring the system to initiate from ks.cfg:
   vi /data/OS/isolinux/isolinux.cfg
      default auto
      label auto
      kernel vmlinuz
      append ks=cdrom:/isolinux/kerry.cfg initrd=initrd.img;
Eighthly, creating an iso system:
   mkisofs -R -J -T -r -l -d joliet-long -allow-multidot -allow-leading-dots -no-bak -o /data/Gcloud-6.1-r009-20-ks-all-noPP-100G-x86_64.iso -b isolinux/isolinux.bin - c isolinux/boot.cat -no-emul-boot -boot-load-size 4 -boot-info-table /data/OS; and
Finally, generating a MD5 checkcode to finish a system disc of GCLOUD as follows.
   /usr/bin/implantisomd5 /data/Gcloud-6.1-r009-20-ks-all-noPP-100G-x86_64.iso

## Claims

1. A method for distributing large-sized Linux software packages, comprising steps of:
(1) providing an original version of a Linux installation disc for a Linux large-sized software development environment, and installing a Linux minimal system on a server;
(2) after the minimal system is installed, obtaining a log file of the installation, wherein the log file comprises a list of packages which the system has installed;
(3) setting a rpm or deb tool in the system to save a cache of downloaded software;
(4) building an environment for creating an ISO, creating a working directory, and copying files of the original disc, except the packages, into the working directory;
(5) installing a dependency environment of the Linux large-sized software in the system; installing packages of the Linux large-sized software in order to verify whether the dependency environment is correct or not, until the Linux large-sized software begins to run properly;
(6) copying a cache of a dependency software under a system software cache directory onto the working directory;
(7) installing createrepo and mkisofs tools which are required by generating of a new disc;
(8) compiling a ks.cfg file, and causing the iso system to guide an automatic installation via the ks.cfg;
(9) re-generating an xml profile, namely a comps.xml file, of the packages under the working directory, and re-editing the comps.xml file according to needs;
(10) generating the iso image file; and
(11) generating a message-digest algorithm 5 (MD5) checkcode.

2. A method as claimed in claim 1, wherein the said minimal system refers to kernel packages and the packages on which the large-sized Linux software depend contained in the Linux installation disc, excluding installations of other application software and desktop system, etc.

3. A method as claimed in claim 1, wherein the log file, after installation, is a /root/install.log file; the install.log file contains the packages which the minimal system installed, then obtains a list of the installed packages by commanding:
awk '/Installing/{print $2}' install.log |sed 's/^[0-9]*://g' >/root/packages.list
then imports the list into a local file, and finally transfers the installed rpm packages into the working directory according to the list.

4. A method as claimed in claim 2, wherein the log file, after installing, is a /root/install.log file; the install.log file contains the packages which the minimal system installed, then obtains a list of the installed packages by commanding:
awk '/Installing/{print $2}' install.log |sed 's/^[0-9]*://g' >/root/packages.list
then imports the list into a local file, and finally transfers the installed rpm packages into the working directory according to the list.

5. A method as claimed in any one of claims 1-4, wherein the step of "setting the rpm tool in the system to save the cache of the downloaded software" in step (3) of claim 1 is to: open the option of saving cache in a /etc/yum.conf configuration file of the Linux system, and then caching the downloaded rpm packages in a directory of /var/cache/yum/x86_64/6/.

6. A method as claimed in any one of claims 1-4, wherein the step of "re-generating the comps.xml profile" in step (9) of claim 1 is to: synchronize all files of the disc into the working directory, then to generate a corresponding comps.xml in a /repodata/ directory under the working directory, wherein the comps.xml is generated by commanding: createrepo -g repodata/*-comps.xml /data/OS/ -- --simple-md-filenames; and then to customize dependencies between components of the comps.xml and the rpm packages based on the command.

7. A method as claimed in claim 5, wherein the step of "re-generating the comps.xml profile" in step (9) of claim 1 is to: synchronize all files of the disc into the working directory, then to generate a corresponding comps.xml in a /repodata/ directory under the working directory, wherein the comps.xml is generated by commanding: createrepo -g repodata/*-comps.xml /data/OS/ -- --simple-md-filenames; and then to customize dependencies between components of the comps.xml and the rpm package based on the command.

8. A method as claimed in any one of claims 1-4, wherein the said packages on which a running of the installed software depends and archive files related to the dependencies relates to the rpm packages and the dependencies thereof required by a running of the developed software after being compiled; the rpm packages are related packages within yum install of the minimal system required by the running of the software; a list of related dependencies is recorded, and the dependencies relationships are added into the comps.xml file; and the corresponding rpm in the directory of /var/cache/yum/x86_64/6/ is copied under /packages/ of the working directory; and, names of the correspondent rpm are added into a list file of TRANS.TBL under /packages/.

9. A method as claimed in claim 5, wherein the said packages on which a running of the installed software depends and archive files related to the dependencies relates to the rpm packages and the dependencies thereof required by a running of the developed software after being compiled; the rpm packages are related packages within yum install of the minimal system required by the running of the software; a list of related dependencies is recorded, and the dependencies relationships are added into the comps.xml file; and the corresponding rpm in the directory of /var/cache/yum/x86_64/6/ is copied under /packages/ of the working directory; and, names of the correspondent rpm are added into a list file of TRANS.TBL under /packages/.

10. A method as claimed in claim 6, wherein the said packages on which a running of the installed software depends and archive files related to the dependencies relates to the rpm packages and the dependencies thereof required by a running of the developed software after being compiled; the rpm packages are related packages within yum install of the minimal system, required by the running of the software; a list of related dependencies is recorded, and the dependencies relationships are added into the comps.xml file; and the corresponding rpm in the directory of /var/cache/yum/x86_64/6/ is copied under /packages/ of the working directory; and, names of the correspondent rpm are added into a list file of TRANS.TBL under /packages/.
